# EUROPEAN PATENT APPLICATION

(11) **EP 4 851 858 A1**
(43) Date of publication of application: **09.12.2026**
(21) Application number: 25180246.8
(22) Date of filing: 02.06.2025
(51) Int. Cl.: G06N 3/045, G06N 20/00

(54) **DYNAMICALLY SWITCHING BETWEEN CORRESPONDING INPUT MODALITIES**

(71) Applicant: GDM Holding LLC, Mountain View CA 94043 (US)
(72) Inventor: SHARIFI, Matthew, Mountain View, California 94043 (US); HARTMANN, Florian Nils, Mountain View, California 94043 (US)
(74) Representative: Marks & Clerk GST

(57) **Abstract**

There is provided a computer-implemented method for generating a response for performing a task using a machine learning model. The method comprises receiving a query and one or more context signals for the query. Each context signal has a respective input modality of a plurality of input modalities, the respective input modality being different to the input modality of each other one of the one or more context signals. The method further comprises selecting at least one of the one or more context signals for inclusion in a model input based upon the query and the respective input modalities of the one or more context signals, processing the model input representing the query and the selected at least one context signal using a first machine learning model to generate a model output, and generating the response for performing the task based upon the model output.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

### SUMMARY

Machine learning models may be implemented to perform a wide variety of tasks. Some machine learning models are multi-modal machine learning models (i.e. configured to process multi-modal inputs and/or generate multi-modal outputs). Use of multi-modal inputs and/or outputs enable important use cases such as image / video understanding and user-interface (UI) automation (e.g. processing Ul elements and generating outputs for performing actions in the user-interface on behalf of a user). Multi-modal capabilities (i.e. processing multi-modal inputs and/or generating multi-modal outputs) often incur a cost (e.g. require many more input and/or output tokens to function when compared with their unimodal machine learning model counterparts). As will become apparent in the detailed description below, the cost incurred may be computational, monetary, latency-based, security-based, etc. which is disadvantageous.

Particular embodiments of the subject matter described in this specification can be implemented so as to realize one or more of the following advantages.

In general, the techniques described herein provide a machine learning model which is able to dynamically switch input and/or output modalities to overcome the foregoing problems. That is, the machine learning model described herein may be trained to select the most efficient (i.e. least costly) input and/or output modalities for generating a response to perform a relevant task. Such a selection is informed at least based upon the query, which has been found to provide a rich source of information for making the selection. The machine learning model described herein are thus "modality-aware" (i.e. aware of the trade-off that arises between using different modalities in different contexts). There is also provided a method for generating a training dataset and a method for training the machine learning model, which supports the provision of the machine learning model for this purpose.

According to a first aspect, there is provided a computer-implemented method for generating a response for performing a task using a machine learning model. The method comprises receiving a query and one or more context signals for the query. Each context signal has a respective input modality of a plurality of input modalities, the respective input modality being different to the input modality of each other one of the one or more context signals. The method further comprises selecting at least one of the one or more context signals for inclusion in a model input based upon the query and the respective input modalities of the one or more context signals, processing the model input representing the query and the selected at least one context signal using a first machine learning model to generate a model output, and generating the response for performing the task based upon the model output.

In some implementations, each of the context signals represents the same underlying content as every other one of the context signals. For example, a speech given by an individual in a video may be represented by the video, by audio, and by a transcript, whilst still representing the same content of the speech. In some implementations, the selection of the at least one context signal may further be based upon a hierarchy of modalities. For example, the hierarchy of modalities may be a hierarchy of the modalities in terms of computational cost, efficiency, effectiveness, etc. for generating the response. The hierarchy of modalities may be adapted or changed based upon any suitable factor (e.g. the task, a user (or properties thereof) of the first machine learning model, etc.).

In some examples, the method for generating the response may include a queue system. That is, a user of the first machine learning model may provide the query to a system implementing the first machine learning model (e.g. over a computer network). In response, the user may (or may not where the queue system activates without the user's input) be asked whether they would like to use a unimodal input and/or output (e.g. text only context signals) or a multi-modal input and/or output (e.g. text and image context signals). If the user selects use of the multi-modal input or output, the user may be required to enter into a queue (i.e. a period of time required to wait for the response). In parallel, while waiting in the queue, the first machine learning model may process another model input to generate another model input using a unimodal input and/or output rather than the selection of one or more multi-modal inputs/outputs. Once the user's request is at the front of the queue (i.e. the user's query is ready for processing), the first machine learning model may process the model input as before with the selection of the at least one context signal or selected output modalities, as below, (i.e. using dynamic input and/or output modality switching).

By dynamically selecting at least one of the context signals for inclusion in the model input based upon the query itself and the available input modalities, the model input representation may be made more efficient (e.g. by using a more compact representation of the context), thus reducing the number of tokens and by extension the floating point operations required for inference whilst still providing sufficient context for the response to the query.

In some implementations, the model input is associated with a default input modality of the plurality of input modalities. In such implementations, selecting at least one of the one or more context signals for inclusion in the model input based upon the query and the respective input modalities of the one or more context signals comprises selecting at least one of the one or more context signals not having the default input modality as their respective input modality.

In some implementations, selecting at least one of the one or more context signals for inclusion in the model input comprises processing a second model input representing the query and an indication of the respective input modality for each of the one or more context signals using a selection machine learning model to generate a second model output indicating the selection of the at least one context signal for inclusion in the model input and selecting the at least one context signal for inclusion in the model input based upon the second model output.

In some implementations, the selection machine learning model may be the same machine learning model as that which is used to process the model input, i.e. the first machine learning model. Alternatively, the selection machine learning model and the machine learning model used to process the model input may be different machine learning models. The same applies, mutatis mutandis, to output modality switching described below.

By processing the second model input (e.g. in a first stage of inference) representing the query and an indication of the available input modalities (e.g. a list of those modalities available for inference), the selection machine learning model may efficiently select which context signals are used to generate the response (e.g. in a second stage of inference). This two-stage approach eliminates the need to process all of the available context signals per se (e.g. a video or a portion thereof) with the first machine learning model. As a result, minimal processing is required to generate the response (i.e. unnecessary context signals are not processed), thereby reducing computational complexity and improving efficiency.

In some implementations, the second model output further indicates, for each of the one or more context signals, (i) whether the input modality of the respective context signal is relevant for responding to at least a portion of the query and/or (ii) whether the input modality of the respective context signal is more efficient for responding to at least a portion of the query than the respective input modality of each other one of the one or more context signals.

By including such indications in the second model output, the selection machine learning model or other logic used as part of the selection process may effectively determine what modalities (and thus context signals) to use for responding to the query (i.e. use as part of the model input). A more effective selection results in improved responses (i.e. not compromising on quality) whilst maintaining the foregoing computational efficiency advantages described above.

In some implementations, the second model input further represents, for each of the one or more context signals a number of tokens of the respective context signal and/or an estimated cost of processing the respective context signal using the first machine learning model to generate the model output.

In some implementations, the provision of the second model output indicating whether the input modality of the respective context signal is more efficient for responding to at least a portion of the query than each other one of the one or more context signals, as described above, may be based upon available compute and/or memory specifications (e.g. available compute and/or memory of a system operating the first machine learning model for processing the model input). In other words, the second model input may further represent available computational resources or system specifications/capabilities for processing the model input using the first machine learning mode to generate the model outputl. In this way, the current operating conditions of the first machine learning model may be taken into account when determining the selection of input (and output, as below) modalities for generating the model output.

By representing a number of tokens (e.g. an estimate or actual value) or estimated cost (e.g. computational, monetary, etc.) for each modality (e.g. the number of tokens the context signal having a particular modality has or the number of tokens an output having a particular modality is likely to have) in the second model input, the selection machine learning model may effectively generate an output indicating the selection of which modalities to use for inference (e.g. a second stage of inference). As mentioned above, an effective selection results in improved performance (i.e. more accurate responses) whilst still improving computational efficiency.

In some implementations, the method further comprises generating a re-generation indication by processing a third model input representing the response using a critic machine learning model to generate a third model output indicating that the response is to be re-generated and/or receiving a re-generation indication based upon a user input indicating that the response is to be re-generated, identifying one or more of the selected context signals for replacement, replacing each of the one or more of the context signals identified for replacement with a different one of the one or more context signals not initially selected for inclusion in the model input thereby forming an updated set of context signals for inclusion in the model input, processing a fourth model input representing the query and the one or more context signals part of the updated set using the first machine learning model to generate a fourth model output, and re-generating the response for performing the task based upon the fourth model output.

In some implementations, the critic machine learning model may be the same machine learning model as that used to process the model input, i.e. the first machine learning model. Alternatively, the critic machine learning model and the machine learning model used to process the model input may be different machine learning models. The same applies, mutatis mutandis, to output modality switching described below.

In some implementations, the one or more context signals not initially selected for inclusion in the model input replacing the context signals identified for replacement include a greater number of tokens than the context signals identified for replacement and/or re-generating the response with the fourth model input representing the one or more context signals part of the updated set is estimated to result in the first machine learning model exhibiting improved performance when compared to generating the response with the fourth model input representing the selected at least one context signal.

By re-generating the response (e.g. generating a second or subsequent response) based upon user input or feedback (e.g. self-critique) from the critic machine learning model, and specifically replacing certain modalities with other modalities not used as part of the initial selection, the response may be refined whilst still conferring the advantages of dynamic modality switching in the re-generation. For example, a first response may not be satisfactory (e.g. as assessed by a user or the critic machine learning model), and a second response may be generated using dynamic modality switching taking into account other more effective or suitable modalities (and incurring a slightly higher computational expense for doing so), thus effectively generating the response whilst keeping computational expense to a minimum. The balance between computational expense and effective response (re-)generation may thus be managed dynamically.

In some implementations, receiving the one or more context signals for the query comprises receiving a primitive context signal having a respective input modality of the plurality of input modalities and representing content and generating, based upon the primitive context signal, the one or more context signals for the query, wherein each of the one or more context signals for the query is generated to have a different input modality to each other one of the one or more context signals while still representing the same content.

In some implementations, the foregoing method may include selecting the first machine learning model for processing the model input from a plurality of available machine learning models based upon the respective input modalities of the selected at least one context signal. In other words, the context signals having particular input (and/or output, as below) modalities may inform the particular machine learning model used to process the model input. This process is referred to herein as a model "cascade". In some examples, each of the available machine learning models may vary in size (e.g. number of parameters), the size varying dependent upon the corresponding input and/or output modality for the model input and/or output. For example, a first one of the available machine learning models may be 7 billion parameters corresponding to a text modality, whereas a second one of the available machine learning models may be 70 billion parameters corresponding to an image or video modality. In this way, inputs (or outputs) with different modalities that require a different level of processing to generate a suitable response may be accounted for.

In some implementations, each of the available machine learning models correspond to or are associated with a different input (and/or output, as below) modality. Accordingly, selecting the first machine learning model based upon the modalities of the respective context signals (or output modalities, as below) may include matching the modalities of the selection to the available machine learning model(s) corresponding to one of the same modalities of the selection. For example, a context signal part of the selection having a text modality may be matched with one of the available machine learning models corresponding to the text modality, and the matching one of the available machine learning models may be provided as the first machine learning model for processing the model input to generate the model output.

According to a second aspect, there is provided a computer-implemented method for generating a response for performing a task using a machine learning model. The method comprises receiving a first machine learning model configured to process a model input representing a query to generate a model output having one or more output modalities of a plurality of output modalities, each of the plurality of output modalities being different to each other one of the plurality of output modalities, selecting, based upon the query, at least one of the plurality of output modalities for the model output, processing the model input representing the query using the first machine learning model to generate a model output having at least one of the selected output modalities, and generating the response for performing the task based upon the model output.

In some implementations, the selection may further be based upon one or more context signals received for processing by the first machine learning model. That is, the one or more of the plurality of output modalities may be selected based upon both the query and the one or more context signals, and the first machine learning model may process a model input representing both the query and the one or more context signals to generate the model output.

In some implementations, the model output is associated with a default output modality of the plurality of output modalities. In such implementations, selecting, based upon the query, at least one of the plurality of output modalities for the model output comprises selecting at least one of the plurality of output modalities not being the default output modality.

In some implementations, selecting, based upon the query, the at least one of the plurality of output modalities for the model output comprises processing a second model input representing the query and an indication of the plurality of output modalities available for the selection using a selection machine learning model to generate a second model output indicating the selected output modalities for the model output and selecting the at least one output modality for the model output based upon the second model output.

In some implementations, the second model output further indicates, for each of the plurality of output modalities, (i) whether the respective output modality is relevant for responding to at least a portion of the query and/or (ii) whether the respective output modality is more efficient for responding to at least a portion of the query than each other one of the plurality of output modalities.

In some implementations, the second model input further represents, for each output modality of the plurality of output modalities an estimated number of tokens for the model output having the respective output modality generated by processing the model input using the first machine learning model and/or an estimated cost of generating the model output having the respective output modality by processing the model input using the first machine learning model.

In some implementations, the method further comprises generating a re-generation indication by processing a third model input representing the response using a critic machine learning model to generate a third model output indicating that the response is to be re-generated and/or receiving a re-generation indication based upon a user input indicating that the response is to be re-generated, identifying one or more of the selected output modalities for replacement, replacing each of the one or more output modalities identified for replacement with a different one of the plurality of output modalities not initially selected for the model output thereby forming an updated set of output modalities for the model output, processing a fourth model input representing the query using the first machine learning model to generate a fourth model output having the one or more output modalities of the updated set, and re-generating the response for performing the task based upon the fourth model output.

In some implementations, re-generating the response where the fourth model output has the one or more output modalities of the updated set is estimated to result in (i) the first machine learning model generating a greater number of tokens than where the fourth model output has the one or more initially selected output modalities and/or (ii) the first machine learning model exhibiting improved performance when compared to generating the model output having the one or more initially selected output modalities.

According to a third aspect, there is provided a computer-implemented method for generating a training dataset for training a machine learning model. The method comprises receiving a first training dataset comprising a first training example including (i) a first context signal having a first modality and (ii) a first query about the first context signal, receiving a second training dataset comprising a second training example including (iii) a second context signal having a second modality different from the first modality and (iv) a second query about the second context signal, matching the first training example with the second training example based upon the respective first and second queries, wherein the first and second queries are identical or exceed a degree of similarity thereby representing a training example query, receiving an indication whether the first modality and/or the second modality are necessary for responding to the training example query, and generating the training dataset comprising a training example including (i) a ground truth output indicating whether the first modality and/or the second modality are necessary for responding to the training example query, and (ii) the training example query.

By generating the training dataset in this way, extensive high quality data may be readily obtained (e.g. from open sources). That is, augmenting existing data, i.e. by joining two or more existing datasets via matching, results in more high quality data available for training for less work, which would otherwise be difficult or impossible to obtain. Machine learning models require a significant amount of data to be trained effectively. The training dataset, and the method for generating it, thus enables the foregoing selection machine learning model to be trained effectively and efficiently. Datasets generated in other ways require significantly more work (e.g. computational or physical work) and thus time to generate. The purpose of providing a more efficient and effective response generation process via dynamic modality switching would thus otherwise be inhibited and not supported.

In some implementations, the training example further includes (iii) a first indication of the first context signal modality and (iv) a second indication of the second context signal modality. In this way, the training dataset supports training the aforementioned machine learning model to select input and/or output modalities based upon further information (i.e. available modalities).

According to a fourth aspect, there is provided a computer-implemented method for training a machine learning model. The method comprises receiving a training dataset generated according to the method of the third aspect, processing a training model input representing (ii) the training example query using the machine learning model to generate a training model output, computing a loss value based upon the training model output and (i) the ground truth output, and updating one or more parameters of the machine learning model based upon the loss value to train the machine learning model.

According to a fifth aspect, there is provided a computer-implemented method for training a machine learning model. The method comprises receiving a training dataset comprising a training example including (i) a ground truth output indicating whether a modality is necessary for responding to a training example query, and (ii) the training example query, processing a training model input representing (ii) the training example query using the machine learning model to generate a training model output, computing a loss value based upon the training model output and (i) the ground truth output, and updating one or more parameters of the machine learning model based upon the loss value to train the machine learning model.

In some implementations, the training example of the training dataset further includes (iii) a second ground truth output indicating a ground truth response for performing the task. In such implementations, computing the loss value comprises computing a first value based upon at least a portion of the training model output and (i) the ground truth output, computing a second value based upon at least a portion of the training model output and (iii) the second ground truth output, and computing the loss value based upon the first value and the second value. In such implementations, the second value is weighted greater than the first value for computing the loss value.

By training the machine learning model in this way (i.e. using two separately weighted values for computing the loss value), both the accuracy of the response itself and the efficient use of different input and/or output modalities may be taken into account. This results in a more stable and balanced model (e.g. the machine learning model is not trained to sacrifice response accuracy in favour of efficient modality selection).

In some implementations, the modalities are each one of an image modality, a video modality, an audio modality, a text modality, a user-interface modality, a sensor modality, a tactile modality, a gestural modality, an environmental modality, a meteorological modality, a simulation modality, a diagnostic modality, a biological modality, a chemical modality, a temporal modality, a geospatial modality, a metadata modality, or a signal modality.

In some implementations, the task comprises a classification task, a control task for a robotic device, a machine translation task, a summarization task, a question-answering task, a data generation task, or a signalling task.

In some implementations, the task is a task for a real-world environment, and wherein the model output is configured for controlling one or more mechanical and/or electronic devices for performing the task in the real-world environment.

There is also provided a computing system comprising one or more processors and one or more non-transitory computer-readable media storing computer-readable instructions configured to cause one or more processors to perform a method according to any one of the first to fifth aspects.

There is also provided one or more non-transitory computer-readable media storing computer-readable instructions configured to cause one or more computing devices to perform a method according to any one of the first to fifth aspects.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG.1 schematically depicts a general overview of a system for dynamically switching an input modality.
FIG.2 schematically depicts a general overview of a system for dynamically switching an output modality.
FIG.3 schematically depicts a system for implementing a dynamic modality switching mechanism.
FIG.4 schematically depicts a system for enhancing dynamic modality switching.
FIG.5 schematically depicts a specific example of dynamic input and output modality switching.
FIG.6 schematically depicts a system for generating a training dataset for training a machine learning model to implement dynamic modality switching.
FIG.7A depicts a flow diagram of a method for generating a response for performing a task using a machine learning model using dynamic input modality switching.
FIG.7B depicts a flow diagram of a method for generating a response for performing a task using a machine learning model using dynamic output modality switching.
FIG.8 depicts a flow diagram of a method for generating a training dataset for training a machine learning model to implement dynamic modality switching.
FIG.9 depicts a flow diagram of a method for training a machine learning model to implement dynamic modality switching.

Like reference numbers and designations in the various drawings indicate like elements.

### DETAILED DESCRIPTION

Machine learning models, such as large language models (LLMs), are increasingly being implemented to solve a wide variety of tasks. Some machine learning models may be multi-modal. That is, a multi-modal machine learning models may be configured to receive inputs and/or generate outputs in the form of two or more modalities, such as in the form of text, audio, video, image, etc. Machine learning models often receive inputs and/or generate outputs in the form of tokens. As referred to herein, a "token" is any predefined unit of input or output data. For example, it is common for machine learning models to receive and emit data corresponding to words, images, videos, audio, etc. (i.e. the tokens), where the tokens belong to a predetermined vocabulary of all possible tokens. A modality as referred to herein is a type of input and/or output (e.g. a distinct form of input and/or output data characterised by the properties of the respective input and/or output data). Examples of different modalities include a text modality (e.g. for text data), an image modality (e.g. for image data), a video modality (e.g. for video data), an audio modality (e.g. for audio data), etc. A more detailed list of some of the possible input and/or output modalities is provided below.

Since certain input and output modalities often require a different number of tokens to represent the same content when compared with other types of modalities (e.g. image or video modalities may require many more tokens when compared to a text modality), the foregoing multi-modal capability of machine learning models often incurs a cost (e.g. computational and/or monetary cost). That is, processing an input using the machine learning model to generate an output can become computationally expensive and may be unpredictable (e.g. vary widely depending upon the particular modality selected by a user for the input and/or output). Moreover, use of certain input and/or output modalities can result in increased latency (e.g. the time between a user providing an input to the machine learning model and receiving an output over a computer network) due to the additional inference cycles required to receive an input, process the input, and/or generate the output when the respective modality varies. Furthermore, many machine learning models implement an attention mechanism which operates at quadratic complexity. That is, as the input size to the machine learning model increases, which may depend upon the particular input modality, the amount of processing required increases disproportionately, thus resulting in increased energy usage which is, *inter alia,* a problem for the environment and commercially disadvantageous. Additionally, since certain input modalities may include a large amount of noise (i.e. unnecessary information) for a particular query, it is disadvantageous to use such modalities for the model input provided to the machine learning model, i.e. the large amount of noise can affect the accuracy of the response generated by the machine learning model and require additional energy to process.

It is also envisaged that malicious actors can attack existing services that implement machine learning model(s) (e.g. a search engine system implementing machine-learning based summarization) by augmenting inputs (e.g. interleaving an input having a text modality with special characters) to include a substantially larger number of tokens than is otherwise reasonably required to generate a response. Such an attack could overwhelm the service (e.g. a denial of service (DoS) attack) or incur extra cost for the service provider. In such a case, use of certain modalities (e.g. a text modality) when compared to use of other modalities (e.g. an image modality) may prevent or inhibit such an attack by virtue of different modalities having different properties (e.g. the different properties of data having a text modality when compared to data having an image modality). Such properties could include a statistical variance (or consistency) in the number of tokens data having a particular modality exhibits, the number of possible tokens (e.g. from a predetermined vocabulary of tokens) data having a particular modality can have, the nature of the tokens that data having a particular modality can have (e.g. where certain tokens of the data having the particular modality may be suitable for malicious purposes), etc.

It is therefore advantageous for machine learning models to dynamically switch their input and/or output modalities when processing model inputs and/or generating model outputs to select the most efficient, secure, etc. input and/or output modality for generating a response. In this way, computational cost, commercial cost, environmental cost, system latency, and risk of cyberattacks may all be reduced. At the same time, performance of the machine learning model may be improved by reducing input noise to the machine learning model.
It is also advantageous to generate a training dataset for this particular purpose (i.e. training machine learning models to dynamically switch modalities). Such datasets are not readily available, thus inhibiting the training of machine learning models that can dynamically switch their input and/or output modalities. By providing a method for generating such a dataset and for training a machine learning model, the purpose of providing dynamic modality switching is supported.

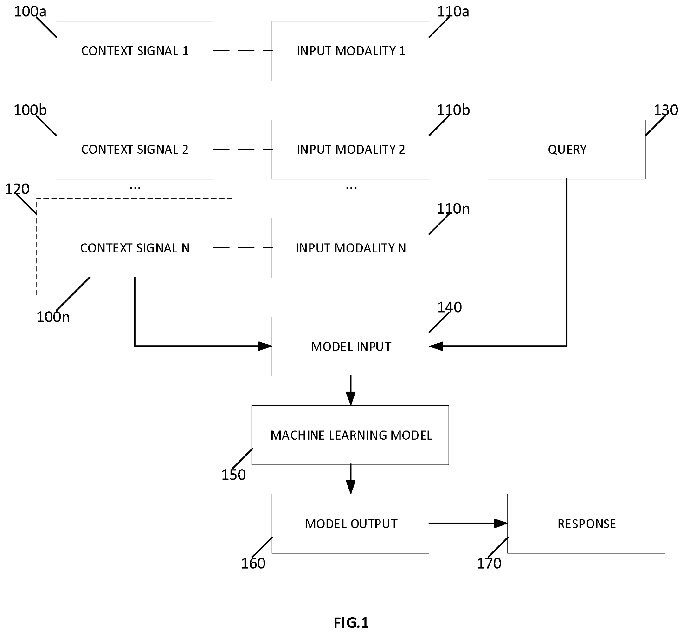

FIG.1 schematically depicts a general overview of a system for dynamically switching an input modality.

A machine learning model 150 is depicted for generating a response 170 to a query 130 for performing a task. The machine learning model 150 may be any suitable machine learning model, such as a neural network implementing an attention mechanism. In specific examples, the machine learning model 150 may be a multi-modal machine learning model. The query 130 may be any suitable query for the machine learning model 150 and can include, *inter alia,* text, image, video, audio, sensor data, etc. (i.e. have one or more of the modalities described herein). For example, the query 130 could be a text prompt including a question or an audio representation of that question. The query 130 may be received (e.g. from a user over a computer network) alongside one or more context signals (i.e. 100a, 100b, ..., 100n). The context signals may be any suitable type of data that serves as context or information for the query 130. For example, the machine learning model 150 may be configured to process a model input 140 (e.g. a vector representation) representing the query 130 and the context signals 100a - 100n such that the machine learning model 150 takes into account the context provided by the context signals when generating the response 170 to the query 130. In a specific example, a context signal may be data representing a previous user query or an image, for example which may be provided by a user over a computer network and received by the system implementing the machine learning model 150 for processing (e.g. to perform the processing described herein, including being processed using the machine learning model 150). In another specific example, the query 130 may be "What was Sherlock Holmes wearing in the last scene of the movie I am currently watching?" and the context signals 100a - 100n may include video data indicating at least a portion of the movie the user is currently watching. The context signals may each have a different input modality. That is, as depicted in FIG.1, context signal 100a corresponds to input modality 110a, context signal 100b corresponds to input modality 110b, etc. The input modality may be an image modality, a video modality, an audio modality, a text modality, a user interface modality, etc. With reference to the foregoing specific example, the context signal 100n may be a textual representation of the portion of the movie the user was currently watching and the context signal 100a may be a video representation of the portion of the movie the user was currently watching. As will now be apparent, the input modality 110n and 110a may be a text modality and a video modality respectively. In other words, in this example, both context signals 100a and 100n may represent the same content but have different input modalities (i.e. text vs. video). It will be appreciated, however, that the context signals 100a, 100b, ..., 100n may instead represent different or similar content rather than identical content.

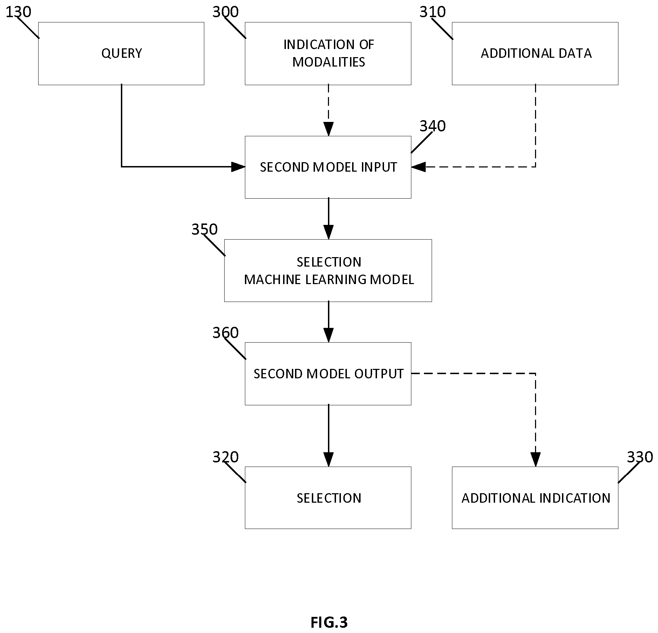

To implement dynamic input modality switching, a selection 120 of at least one of the context signals 100a - 100n for inclusion (or representation, indication, etc.) in the model input 140 may be performed (i.e. context signal 100n is selected for inclusion in FIG.1). In practice, one or multiple context signals may be selected. The selection 120 may be performed based upon the query 130 and the input modalities 110a, 110b, ..., 110n of the respective context signals. For example, the context signal 100n may be selected based upon the query 130 and the respective input modality 110n determined from the query 130. In a specific example, the query 130 may be "What did Sherlock Holmes just say about the criminal mind in the movie I am currently watching?" and the context signal 100n may be a transcript of the movie the user is currently watching. The selection of the particular context signal 100n may be inferred based upon the logic that the query 130 relates to what has been *said,* and thus a context signal 100n, such as a transcript having a textual modality 110n, would be most efficient for generating the response 170 in light of the particular query 130. As will become apparent with reference to FIG.3, the selection 120 may occur using a machine learning model. However, it is also envisaged that the selection 120 may occur by other means (e.g. by identifying key words in the query 130 and selecting context signals by matching said key words in the query 130 to context signals with appropriate or suitable modalities based upon a predetermined mapping between key words and the modalities).

In some examples, the model input 140 may be associated with a default input modality of the plurality of input modalities 110a - 110n. That is, the machine learning model 150 processing the model input 140 to generate the model output 160 may be configured to process the model input 140 according to a preselected modality in the absence of any further selection based upon the query 130, as described above. For example, the default input modality may be a video modality, i.e. the model input 140 may, by default, be configured to represent video data. Selecting 120 the at least one of the one or more context signals 100a - 100n for inclusion in the model input 140 based upon the query 130 and the respective modalities of the one or more context signals 100a - 100n may comprise selecting at least one of the one or more context signals 100a - 100n not having the default input modality as their respective input modality. With reference to the previous example, if the default input modality associated with the model input 140 is a video modality, the selection 120 may be made to include at least one of the context signals 100a - 100n not having a video modality (e.g. including context signal(s) not being video data). In some implementations, there may be a plurality of default input modalities associated with the model input 140. The default input modality may thus be overridden based upon the query 130 (i.e. selecting context signal(s) based upon the query 130) to confer the advantages described above.

The default input modality may be determined or pre-selected in any suitable way, e.g. based upon user information (i.e. information associated with a user of the machine learning model 150 described herein). The user information may include one or more properties of a user device of the user (e.g. a user device for initiating processing with the machine learning model 150). In a specific example, if the user information indicates that the user is currently viewing or watching a video (e.g. on the aforementioned user device), the default input modality may be pre-selected to be a video modality. In another specific example, if the user information indicates that the user is currently operating within an application (e.g. an application installed on the aforementioned user device) including a user-interface, the default input modality may be pre-selected to be a user-interface modality.

Once at least one of the context signals 100a - 100n has been selected, the machine learning model 150 may process the model input 140 representing the query 130 and the selected context signal(s), i.e. the context signal(s) of the selection 120. That is, as depicted in FIG.1, the model input 140 may represent the query 130 and the context signal 100n. The machine learning model 150 may process the model input 140 representing the query 130 and the context signal 100n to generate a model output 160. The response 170 for performing the task may subsequently be generated based upon the model output 160. That is, the model output 160 may be any suitable output and may, in some examples, be the response 170 itself. However, in other examples, the model output 160 may be a probability distribution indicating a next token in a current output sequence of tokens for generating the response 170 (i.e. where the machine learning model operates auto-regressively).

In some examples, receiving the one or more context signals 100a - 100n for the query 130 may comprise receiving a primitive context signal (e.g. context signal 100a) having a respective input modality (e.g. a video modality) of the plurality of input modalities 110a - 110n and representing content (e.g. a video or a portion thereof). The receiving may further comprise generating, based upon the primitive context signal (e.g. 100a), the one or more context signals 100a - 100n for the query 130. As will be apparent, the generated one or more context signals 100a - 100n, in this example, may each be generated to have a different input modality to every other one of the context signals 100a - 100n whilst representing the same content. For example, where the context signal 100a is a video, i.e. the primitive context signal, having a video modality, the context signals 100b - 100n may be generated based upon the context signal 100a. The generation may occur in any suitable way (e.g. by processing the video of the context signal 100a to generate a transcript having a text modality or an audio file representing the same content of the context signal 100a - such generation may occur using any suitable means, such as another machine learning model). As will be apparent, the transcript and the audio file (or data representative thereof, such as one or more tokens) in this example may be the context signal 100b and the context signal 100n respectively. In this way, a set of context signals representing the same content but having different modalities may be generated for use in the dynamic modality switching process. Such a set of context signals may be generated once and used in multiple iterations of inference (e.g. in multiple inference cycles and for different queries) for efficiency. The context signals 100a - 100n generated in this way may be efficiently managed and used by the machine learning model 150 in any suitable way (e.g. using key-value (KV) caching in the case where the machine learning model 150 implements an attention mechanism). While the context signals 100a - 100n may be generated based upon a primitive context signal, as previously described, it will also be appreciated that one or more of the context signals 100a - 100n may be explicitly provided, e.g. by a user, to the system implementing the machine learning model 150 (e.g. over a computer network alongside the query 130) or be implicit (e.g. implicit in the query 130 itself, or be based upon data which is consistently transmitted to and from the client device to the system implementing the machine learning model 150). Context signals 100a - 100n may also be obtained automatically, by the system implementing the machine learning model 150, i.e. where the system has access to context resources, e.g. as a callable service or through access to the Internet.

By processing the model input 140 representing the context signal(s) of the selection 120 that were identified based upon e.g. the suitability, efficiency, relevance, etc. of the respective input modalities in light of the query 130, the foregoing advantages may be achieved when generating the response 170. For example, the context signal 100n may comprise fewer tokens than context signal 100a for representing the same or similar content while still providing a the same or a suitable response 170 to the query 130, thus reducing, *inter alia,* computational cost, energy usage, response time, etc.

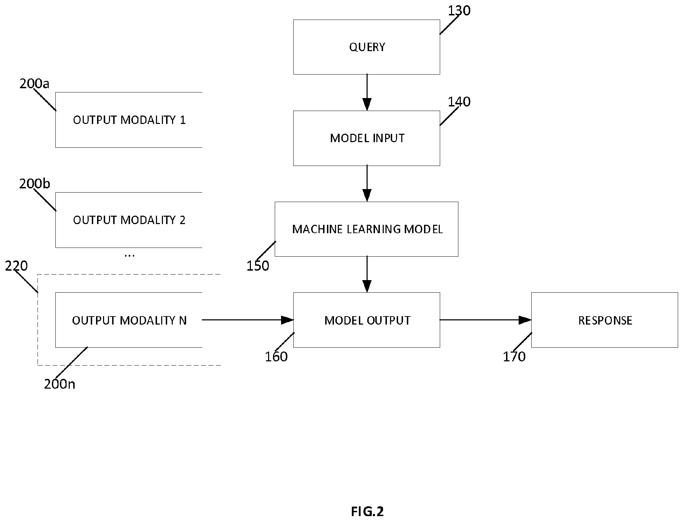

FIG.2 schematically depicts a general overview of a system for dynamically switching an output modality.

As previously described with reference to FIG.1 and input modality switching, there is depicted the machine learning model 150 which is configured to process the model input 140 to generate the model output 160 for generating the response 170. The machine learning model 150 described with reference to FIG.1 may be the same or different machine learning model 150 described presently with reference to FIG.2, i.e. input and output modality switching may be combined for the same machine learning model 150 or implemented separately for different machine learning models.

The machine learning model 150 may be configured to generate the model output 160 having one or more of a plurality of output modalities (200a, 200b, ..., 200n). For example, the machine learning model 150 may be configured to process the model input 140 representing "What was Sherlock Holmes wearing in the last scene of the movie I am currently watching?" and generate the model output 160 representing text data, image data, or both. In other words, the model output 160 may have an image modality, a video modality, an audio modality, a text modality, a user interface modality, etc. That is, the machine learning model 150 may be multi-modal (i.e. configured to generate the model output 160 being unimodal or multi-modal, which may be determined upon inference and be based upon the parameters of the machine learning model 150 and its training). In other words, the machine learning model 150 may generally be configured to generate the model output 160 in one or more of a plurality of different output modalities 200a - 200n.

To implement dynamic output modality switching, a selection 220 of one or more of the plurality of output modalities 200a, 200b, ..., 200n may be performed. The selection 220 may be based upon the query 130. In some examples, where context signals are also provided (e.g. as described with reference to FIG.1), the selection may further be based upon one or more of the available context signals (i.e. 100a 100n). In this case, the information embedded in the additional context signals provide additional context for performing the selection 220, however use of such context signals for the selection 220 is not necessary or required. The selection 220 may include selecting one or more of the output modality 200a, the output modality 200b, and the output modality 200n based upon the query 130. In a specific example, the query 130 may be "Please can you *show* me what Sherlock Holmes looks like in the movie I just watched?" and the selected output modality 200n may be an image or video modality. The selection 220 may thus, *mutatis mutandis,* be based upon the same or similar logic as described above with reference to FIG.1. That is, the query 130 may indicate that a visual output would be most efficient for generating the response 170. In this example, the output modality 200n may be an image or video modality selected because image or video modalities are visual modalities which are determined to be efficient for generating the response 170 in light of the query 130 which includes a reference to *show* something. As will be appreciated, the selection 220 may be a selection of one or multiple output modalities (e.g. where multiple modalities are suitable or efficient).

In some examples, the model output 160 may be associated with a default output modality of the plurality of output modalities 200a - 200n. That is, the machine learning model 150 processing the model input 140 to generate the model output 160 may be configured to generate the model output 160 according to a preselected modality in the absence of any further selection based upon the query 130, as described above. For example, the default output modality may be a video modality, i.e. the model output 160 may, by default, be configured to represent video data. Selecting 220 the at least one of the plurality of output modalities 200a - 200n for the model output 160 based upon the query 130 may comprise selecting at least one of the plurality of output modalities not being the default output modality. With reference to the previous example, if the default output modality associated with the model output 160 is a video modality, the selection 220 may be made to include at least one of the plurality of output modalities 200a - 200n not having a video modality (e.g. including only types of output data excluding video data). In some implementations, there may be a plurality of default output modalities associated with the model output 160. The default output modality may thus be overridden based upon the query 130 (i.e. selecting output modalities based upon the query 130) to confer the advantages described above.

The default output modality may be determined or pre-selected in any suitable way, e.g. based upon user information (i.e. information associated with a user of the machine learning model 150 described herein). The user information may include one or more properties of a user device of the user (e.g. a user device for initiating processing with the machine learning model 150). In a specific example, if the user information indicates that the user is currently viewing or watching a video (e.g. on the aforementioned user device), the default output modality may be pre-selected to be a video modality. In another specific example, if the user information indicates that the user is currently operating within an application (e.g. an application installed on the aforementioned user device) including a user-interface, the default output modality may be pre-selected to be a user-interface modality.

The model output 160 may therefore be generated having the one or more output modalities of the selection 220. This may be achieved in any suitable way. For example, where the model output 160 comprises one or more tokens selected from a predetermined vocabulary of all possible tokens, the predetermined vocabulary may be limited or restricted to only tokens having the one or more output modalities of the selection 220. In another example, the machine learning model 150 may receive a system prompt or operational instruction, or be otherwise operationally adapted (e.g. by dynamically adapting its functional or operational logic according to the selection 220) to restrict the machine learning model 150 to outputting only particular output modalities of the selection 220. In yet another example, the machine learning model 150 may comprise one or more output heads each corresponding to a different modality (i.e. a multi-headed machine learning model with different heads for generating outputs with different output modalities). In this example, the selection 220 may be implemented by modifying the particular heads of the machine learning model 150 corresponding to the output modalities not part of the selection 220 to not generate outputs during inference.

By generating the model output 160 having specifically the one or more output modalities of the selection 220, i.e. those modalities selected 220 based upon the query 130, the less suitable, less efficient, less relevant, etc. output modalities for generating the model output 160 may be discarded, thus conferring the advantages described above. For example, if the query 130 was "Please can you transcribe what Sherlock Holmes just said in the movie I am currently watching?", generating the model output 160 having a video modality may be avoided (i.e. one of the output modalities 200a, 200b, etc. may not be selected based upon the query 130) which could otherwise be determined to be unsuitable, inefficient, and irrelevant for the query 130 which relates to a request for transcription (i.e. doesn't require an output that represents video), thereby reducing, *inter alia,* computational cost, energy usage, response time, etc.

Consistent with the description provided above, the following is a non-exhaustive list of possible modalities for the input and/or output modalities 110a - 110n, 200a - 200n: a text modality (e.g. for text data), an image modality (e.g. for image data), a video modality (e.g. for video data), an audio modality (e.g. for audio data), a user-interface modality (e.g. for any data representing a user-interface), a sensor modality (e.g. for sensor data), a tactile modality (e.g. for any data representing touch), a gestural modality (e.g. for any data representing a gesture), an environmental modality (e.g. for data relating to, or representing aspects of, the environment), a meteorological modality (e.g. for data relating to, or representing aspects of, meteorology), a simulation modality (e.g. for any data representing a simulation or properties thereof), a diagnostic modality (e.g. for any data representing a diagnosis), a biological modality (e.g. for data relating to biology, such as human biology), a chemical modality (e.g. for data relating to chemistry, such as chemical or biochemical structure or data relating to interactions between chemicals), a temporal modality (e.g. for any data represented with respect to time, such as time series data), a geospatial modality (e.g. for any geospatial data, such as data representing a geospatial location), a metadata modality (e.g. for any data representing information about other data), and a signal modality (e.g. for any data representing a signal).

That is, the context signals 100a - 100n and the model output 160 (or the response 170 generated therefrom) may be text data, image data, video data, audio data, user-interface data, sensor data, tactile data, gestural data, environmental data, meteorological data, simulation data, diagnostic data, biological data, chemical data, temporal data, geospatial data, metadata, signal data, etc.

FIG.3 schematically depicts a system for implementing a dynamic modality switching mechanism.

There is depicted a selection machine learning model 350. As will become apparent, the selection machine learning model 350 may in some examples serve as the mechanism for providing the dynamic input and/or output modality switching. In some examples, the selection machine learning model 350 may be part of the machine learning model 150 as previously described. In other examples, the selection machine learning model 350 is a separate machine learning model. The selection machine learning model 350 may be trained to predict, based upon the query 130 (and optionally, as depicted by the dotted line, an indication of the available modalities 300), the selections 320 of one or more of 120, 220 of FIG.1 and FIG.2 respectively. In some examples, the foregoing prediction may be generated in an initial inference cycle of the machine learning model 150 before generating the response 170 in a separate inference cycle (e.g. bifurcated, split, or two-stage inference). It will be appreciated that the selection machine learning model 350 may be different to the machine learning model 150 previously described. The different machine learning model (e.g. the selection machine learning model 350) may be a smaller machine learning model than the machine learning model 150 (e.g. in terms of parameters, such as a 7 billion parameter model compared to a 70 billion parameter model). In this example, the selection machine learning model 350may be a unimodal model (i.e. not a multi-modal machine learning model as is the case with the machine learning model 150) or a multi-modal machine learning model. That is, in some examples, two separate models may be implemented; the selection machine learning model 350 for predicting the selection 320 (i.e. representing the selections 120, 220 of FIG.1 and FIG.2) and a second machine learning model 150 for generating the response 170 according to the selection 320 (i.e. where the selection 320 informs the model input 140 and/or the model output 160 modalities respectively).

To identify the selection 320 for the model input 140 and/or model output 160, the selection machine learning model 350 may process a second model input 340. The second model input 340 may represent the query 130. Optionally (as depicted by the dotted line in FIG.3), the second model input 340 may represent an indication 300 of the modalities available for selection. In a specific example, the query 130 may be "What was Sherlock Holmes wearing in the last scene of the movie I am currently watching?" and the indication 300 may be "{context_signal_1: image modality, context_signal_2: video modality, ..., context_signal_n: text modality}". In another specific example, the query 130 may be the same and the indication 300 may be "{output_modality_1: image, output_modality_2: video, ..., output_modality_n: text}". The second model input 340 may be any suitable input to the selection machine learning model 350 (e.g. a vector representation). The selection machine learning model 350 may process the second model input 340 to generate a second model output 360. The second model output 360 may indicate the selection 320, i.e. the selection 120 of the at least one context signal for the model input 140 or the selection 220 of the at least one output modality for the model output 160. For example, the second model output 360 may include "{selected_context_signals: [{context_signal_n: text modality}, ...]}". In this example, the second model output 360 may provide the indication of the selection 120 described with reference to FIG.1. The machine learning model 150 may thus process a model input 140 representing the query 130 and the context signal 100n (i.e. determined based upon the second model output 360) to generate the model output 160. In another example, the second model output 360 may include "{selected_output_modalities: [text, image]}". In this example, the second model output 360 may provide the indication of the selection 220 described with reference to FIG.2. The machine learning model 150 may thus process a model input 140 representing at least the query 130 to generate the model output 160 having a text modality and/or image modality (i.e. determined based upon the second model output 360). The second model output 360 may be any suitable output from the machine learning model 150 (e.g. probability distribution, categorical data, etc.) for the foregoing purpose.

In some circumstances, it may be advantageous for the second model input 340 to further include or represent additional data 310. The additional data 310 may include an indication for each of the one or more context signals 100a - 100n of the number of tokens of the respective context signal. For example, the context signal 100a may include one-hundred-twenty-nine (129) tokens, the context signal 100b may include two-hundred-twenty-three (223) tokens, and the context signal 100n may include seventy-three (73) tokens, and the additional data 310 may include "{context_signal_1: 129, context_signal_2: 223, ..., context_signal_n: 73}". Correspondingly, the additional data 310 may include an indication for each of the plurality of output modalities 200a - 200n of an estimated number of tokens for generating the response 170 where the model output 160 has the respective output modality. For example, the model output 160 generated by the machine learning model 150 having a text modality may be estimated to generate one-hundred-fifty-six (156) tokens as opposed to an estimated one-hundred-eighty-nine (189) tokens where the model output 170 has a video modality, and the additional data 310 may include "{text_modality: 156, video_modality: 189}". The selection machine learning model 350 may thus take into account the number of tokens (e.g. reflective of the amount of processing required or information embedded therein) when generating the second model output 360.

The additional data 310 may also include an indication for each of the one or more context signals 100a - 100n of the estimated cost of processing the respective context signal using the machine learning model 150. For example, processing the model input 140 representing the context signal 100a having a text modality may have an estimated computational cost of one-hundred-thirty-seven (137) teraFLOPs, an estimated latency cost of twenty-nine (29) ms, and an estimated economic cost of $7.74 * 10^-6 when generating the response 170, and the additional data 310 may include "{context_signal_1: {computational_cost: 137, latency: 29, economic_cost: 7.74}, ...}". Correspondingly, the additional data 310 may include an indication for each of the plurality of output modalities 200a - 200n the estimated cost of generating the model output 160 having the respective output modality. For example, processing the model input 140 to generate the model output 160 having a text modality may have an estimated computational cost of one-hundred-sixty-nine (169) teraFLOPs, an estimated latency cost of thirteen (13) ms, and an estimated economic cost of $6.65 * 10^-6, and the additional data 310 may include "{text_modality: {computational_cost: 169, latency: 13, economic_cost: 6.65}, ...}". The selection machine learning model 350 may thus take into account the estimated cost of using different combinations of output modalities when generating the second model output 360. The estimations may be provided by any suitable means, e.g. maintaining statistical information on previous inference cycles using the machine learning model 150 or by using heuristics. For example, the average cost of an inference cycle using a particular input and/or output modality may be known. In another example, the average number of tokens generated by where the model output 160 has a particular output modality may also be known.

In some circumstances, it may be advantageous for the second model output 360 to provide an additional indication 330. The additional indication 330 may include, for each of the one or more context signals 100a - 100n, an indication of (i) whether the respective context signal having its respective input modality is relevant for responding to at least a portion of the query 130. For example, the additional indication 330 may include "{context_signal: {type: text_modality, relevance: 0.73}, ...}". The additional indication 330 may further include for each of the one or more context signals 100a - 100n (ii) an indication whether the respective context signal having its respective input modality is efficient for responding to at least a portion of the query 130. For example, the additional indication 330 may include "{context_signal: {type: text_modality, efficiency: 0.63}". In this way, the second model output 360 may enhance the selection 120 from the context signals 100a - 100n. Correspondingly, the additional indication 330 may include for each of the output modalities 200a - 200n an indication (i) whether the respective output modality is relevant for responding to at least a portion of the query 130. For example, the additional indication 330 may include "{output_modality_1: {type: text_modality, relevance: 0.56}, ...}". The additional indication 330 may further include for each of the output modalities 200a - 200n an indication (ii) whether the respective output modality is efficient for responding to at least a portion of the query 130. For example, the additional indication 330 may include "{output_modality_1: {type: text_modality, efficiency: 0.89}". The relevance and efficiency indications may be indicated in any suitable way (e.g. on a zero-to-one scale). The selection machine learning model 350 may thus take into account the relevance and/or efficiency of using particular input and/or output modalities for making the selection 320, thus enhancing the advantages described above.

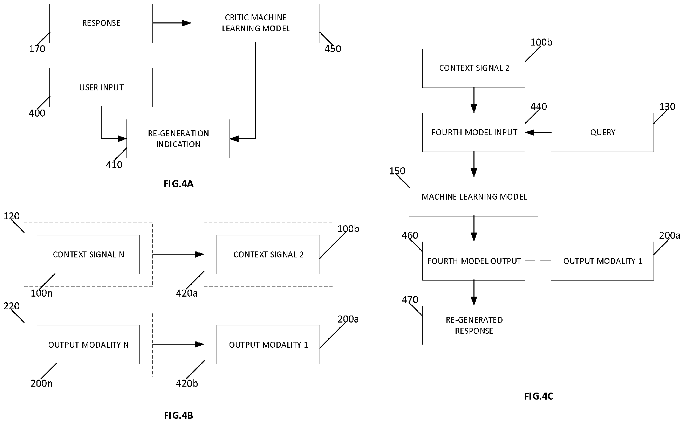

FIG.4A schematically depicts a first part of a system for enhancing dynamic modality switching. FIG.4B schematically depicts a second part of the system for enhancing dynamic modality switching. FIG.4C schematically depicts a third part of the system for enhancing dynamic modality switching. Together, FIG.4A-4C depict the system for enhancing dynamic modality switching, as described in detail below.

To enhance the response 170 (e.g. to improve the accuracy thereof) generated in accordance with the above, the response 170 may be re-generated (i.e. generated for a second or subsequent time) to provide a re-generated response 470, as depicted in FIG.4C. Specifically, and as will become apparent, the re-generation may include generating another response in a similar manner to as described above with different selections 120, 220. Re-generation may be initiated upon receiving a re-generation indication 410 as depicted in FIG.4A. The re-generation indication 410 may be received in any suitable way. For example, the re-generation indication 410 may be generated in response to processing the response 170 (i.e. initial or original response) using a critic machine learning model 450 (or the machine learning model 150 where the critic machine learning model 450 is part of the machine learning model 150 used to generate the response 170 initially) and subsequently provided for the initiation. The critic machine learning model 450 may be a machine learning model analogous to the machine learning model 150 (or part thereof) that is configured to critique the response 170, i.e. to generate the re-generation indication 410 where e.g. the response 170 is deficient. The response 170 may be provided as input to the critic machine learning model 450 in the form of a model input and the re-generation indication 410 may be indicated in the form of a model output. Alternatively, or in addition, the re-generation indication 410 may be provided explicitly via a user input. For example, a user may provide their input to a client device and the user input may be received indicating that re-generation should be initiated over a computer network.

Upon initiating re-generation (i.e. after receiving the re-generation indication 410), one or more of the previously selected context signals 120 and/or output modalities 220 may be identified for replacement, as depicted in FIG.4B. The identification may occur in any suitable way (e.g. by identifying a context signal with a different input modality and/or identifying a different output modality that either consists of more tokens / is estimated to result in outputting more tokens or would otherwise result in improved performance for the re-generated response 470). The context signals having different input modalities and/or the output modalities identified for replacement may thus be replaced with different ones of the plurality of context signals 100a - 100n and/or output modalities 200a - 200n respectively. For example, if the context signal 100n was initially selected 120 and the context signal 100n is identified for replacement, the context signal 100n may be replaced with one of the other context signals 100a - 100n. More than one selected context signal may be replaced. In another example, if the output modality 200a was initially selected as the output modality of the model output 160 and the output modality 200a is identified for replacement, the output modality 200a may be replaced with one of the other available output modalities 200a - 200n. More than one selected output modality may be replaced. In both cases, the replacement results in an updated set 420a, 420b of context signals and output modalities respectively. As depicted, the updated set 420a includes a different context signal 100b to the original selection 120 including the context signal 100n, and the updated set 420b includes a different output modality 200a to the original selection 220 including the output modality 200n.

The updated sets 420a, 420b may be used to generate the re-generated response 470, as depicted in FIG.4C. That is, for input modality switching and re-generating the response 170, a fourth model input 440 (i.e. analogous to the model input 140) may represent the query 130 and the one or more context signals part of the updated set 420a (i.e. including the context signal 100b, but not including the context signal 100n). The fourth model input 440 may by processed using the machine learning model 150 to generate a fourth model output 460. The fourth model output 460 (i.e. analogous to the model output 160) may thus be provided for re-generating the response 170 in accordance with the description above for generating the response 170 using the model output 160. For output modality switching and re-generating the response 170, the fourth model input 440 may represent the query 130 and the fourth model input 440 may be processed using the machine learning model 150 to generate a fourth model output 460. The fourth model output 460 may have one or more output modalities of the updated set 420b (i.e. rather than one or more of the initially selected 220 output modalities including the output modality 200n). The fourth model output 460 may thus be provided for re-generating the response 170 in accordance with the description above for generating the response 170 using the model output 160. The re-generated response 470 may be generated using the same machine learning model 150 or a different machine learning model to the machine learning model used for generating the initial response 170. It will be appreciated that the process or re-generating the response 170 may include replacing context signals with different input modalities, replacing output modalities, or both (i.e. re-generation may include use of both updated sets 420a, 420b).

The context signals that replace those context signals identified for replacement (i.e. the context signal 100b in FIG.4B) may include a greater number of tokens than the context signals identified for replacement (i.e. the context signal 100n in FIG.4B). For example, the context signal 100b may include two-hundred-sixty-seven (267) tokens, whereas the context signal 100n may include fifty-six (56) tokens). By replacing those context signals identified for replacement with context signals including a greater number of tokens, more information and thus context is available for responding to the query 130 when compared to using the original selection 120. Likewise, generating the fourth model output 460 as part of the re-generation may be estimated to result in generating a greater number of tokens using the output modalities of the updated set 420b (i.e. output modality 200a in FIG.4B) compared to using the output modalities of the initial selection 220. For example, using the output modality 200a may be estimated to result in generating the fourth model output 460 including five-hundred-sixty-six (566) tokens as opposed to one-hundred-twenty-size (126) tokens using the output modality 200n. By generating the fourth model output 460 that is estimated to include a greater number of tokens for the re-generation, the response 170 may be re-generated to output more information, which may be more suitable for responding to the query 130. In a similar manner, use of the updated sets 420a, 420b as opposed to the initial selections 120, 220 respectively may be estimated to result in improved performance. Improved performance (e.g. of the machine learning model 150) as referred to herein may refer to improved accuracy of the machine learning model 150. For example, in the context of re-generating the response 170, the expression "improved performance" may refer to the fact that the re-generated response 470 is a more accurate response when compared to the initial response 170. The performance (e.g. accuracy) of the machine learning model 150 may be evaluated in any known way (e.g. using known, objective, and standardized benchmarking or evaluation metrics, or by using heuristics).

The improved performance provided by the re-generated response 470 provided in this way thus satisfies user requirements whilst at the same time maximizing efficiency through the use of the selection mechanism previously described (i.e. to use the most efficient modalities). For example, the machine learning model 150 may exhibit improved performance when processing a context signal having an image modality as opposed to a context signal having a text modality because, in some circumstances, images may embed more information than text. In other words, the selections 120, 220 may be refined by a user (e.g. after an initial generation of a response) such that an optimal balance between response 170, 470 quality and efficiency may be reached.

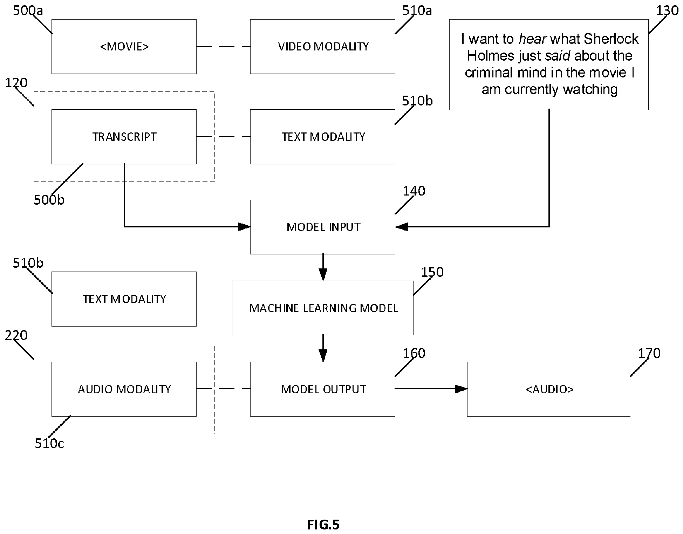

FIG.5 schematically depicts a specific example of dynamic input and output modality switching which is generally described above with reference to FIG.1 and FIG.2.

In FIG. 5 there is provided the machine learning model 150 as previously described. The model input 140 to the machine learning model 150 represents the query 130. The query 130 is "I want to hear what Sherlock Holmes just *said* about the criminal mind in the movie I am currently watching". The query 130 thus indicates that the model output 160 should be aural (i.e. the query 130 indicates that a user wants to *hear* something) and indicates that the query 130 relates to something what has just been *said.* The selections 120, 220 based upon the query 130 may occur on the basis of logic that determines those modalities that may be computed most efficiently and which are responsive to the user requirement (e.g. as emulated by the machine learning model 150, as described with reference to FIG.3, or by pre-defined logic such as key word matching). In the present example, the logic may be configured to determine that the query relates to which has been "said" and that speech may be accurately and efficiently (with respect to data and compute requirements) represented in text, such that a text modality should be used. The query 130 may thus be analysed by e.g. the machine learning model 150 to output the selections 120, 220. In FIG.5, the selection 120 includes a context signal 500b in the form of a transcript (i.e. textual transcript of the movie the user is currently watching having a text modality 510b) for the model input 140, and the selection 220 includes an audio modality 510c for the model output 140. As will now be apparent, the selection 120 is a selection made from both a context signal 500a (i.e. the movie that the user is currently watching, or a portion thereof, having a video modality 510a) and the transcript 500b having the text modality 510b. Likewise, the selection 220 is a selection made from both the text modality 510b and the audio modality 510c.

Accordingly, the machine learning model 150 may process the model input 140 representing "I want to *hear* what Sherlock Holmes just *said* about the criminal mind in the movie I am currently watching" and the selected 120 context signal(s), i.e. the transcript 500b of the movie (or a portion thereof) the user is currently watching, to generate the model output 160. The model output 160 may be generated by the machine learning model 150 such that the model output 160 has only the one or more selected 220 output modalities, i.e. the audio modality 510c. As a result, the response 170 may be generated to include such selected 220 modalities, i.e. the response 170 has an audio modality informed by the query 130. The response 170 may thus, in this example, be audio of Sherlock Holmes saying "There is nothing more deceptive than an obvious fact". In this specific example, the model input 140 representing the transcript 500b having the text modality 510b may be based upon the transcript requiring less tokens than e.g. the audio or video modality 510a, or the text modality 510b being determined to be an efficient or appropriate modality to use in light of the user query 130. Likewise, the use of the audio modality 510c for the model output 160 may be based upon the audio output requiring less tokens than e.g. an output having a video modality 510a or the audio modality 510c being determined to be an efficient or appropriate modality to use in light of the query 130.

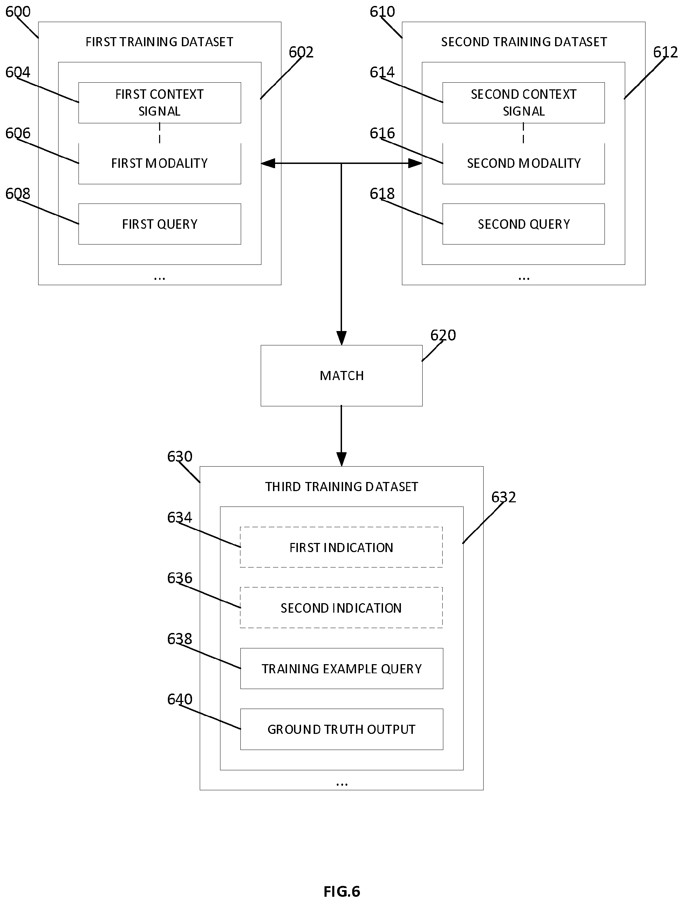

FIG.6 schematically depicts a system for generating a training dataset for training a machine learning model to implement dynamic modality switching.

As previously mentioned, it is desirable to provide a training dataset for training the machine learning model 150 to support the purpose of implementing dynamic modality switching. The training dataset, of course, can be used to train other machine learning models too. To this end, there is provided the following method.

A first training dataset 600 and a second training dataset 610 are received. The first and second training datasets 600, 610 may, for example, be publicly available datasets that are separately focussed on different individual modalities (e.g. the first dataset 600 may be a dataset of queries relating to movie transcripts - text modality; and the second dataset 610 may be a dataset of queries relating to movie frames - image or video modalities). The first and second training datasets 600, 610 may also include other data (e.g. ground truth data for some particular training task the respective training dataset was originally intended for). The first training dataset 600 may comprise one or more training examples (e.g. a first training example 602, as depicted). The first training example 602 may comprise (i) a first context signal 604 having a first modality 606 and (ii) a first query 608 about the first content signal 604. The first context signal 604 may be analogous to one of the context signals 100a - 100n as previously described. The first query 608 may be analogous to the query 130 as previously described. In one example, the first training example 602 may include (i) a transcript of a movie as the first context signal 604 having a text modality and (ii) a query of "What is the relationship between Sherlock Holmes and Irene Adler?". Likewise, the second training dataset 610 may comprise one or more training examples (e.g. a second training example 612, as depicted). The second training example 612 may comprise (i) a second context signal 614 having a second modality 616 and (ii) a second query 618 about the second context signal 614. The second context signal 614 may be analogous to one of the context signals 100a - 100n as previously described. The second query 618 may be analogous to the query 130 as previously described. In one example, the second training example 612 may include (i) a one or more frames of a movie as the second context signal 614 having a video modality and (ii) a query of "Please describe the dynamic between Irene Adler and Sherlock Holmes".

Accordingly, the first and second training datasets 600, 610 may be joined in the following way to generate a third training dataset 630. As will be appreciated, the third training dataset 630 may be suitable for training the machine learning model 150 to implement dynamic modality switching. To join the first 600 and second 610 training datasets, one or more pairs of training examples (e.g. the first 602 and second 612 training examples, as depicted) from the first 600 and second 610 training datasets may be matched 620 and used to generate one or more training examples for the third training dataset 630.

The first training example 602 may be matched with the second training example 612 based upon the respective first query 608 and second query 618. Specifically, the first 602 and second 612 training examples may be matched by determining that the first query 608 and the second query 618 are identical or exceed a threshold degree of similarity. For example, both the first 608 and second 618 queries may be "What is the relationship between Sherlock Holmes and Irene Adler?", i.e. identical. In another example, the first query 608 may be "What is the relationship between Sherlock Holmes and Irene Adler?" and the second query 618 may be "Please describe the dynamic between Irene Adler and Sherlock Holmes". In this example, the first 608 and second 618 queries may be determined to exceed a threshold degree of similarity, e.g. because the two queries have similar or identical semantic meaning. The degree of similarity may be determined in any suitable way (e.g. by pre-defined logic, heuristic, human indication, or by representing the first 608 and second 618 queries as vectors using a vector embedding model and computing a similarity metric for the pair, such as a cosine similarity metric). The two queries 608, 618 may thus, when taken together, represent a general training example query 638 (e.g. the first query 608, the second query 618, or an aggregate thereof). In this way, a new training example for the third training dataset 630 may be generated having a single query joining properties of both the first 602 and second 612 training examples.

Once a match 620 between at least two training examples from both the first 600 and second 610 training datasets has been determined, a third training example 632 for the third training dataset 630 may be generated. As will be apparent, the first modality 606 may be a different modality when compared to the second modality 616. That is, in the specific example above, the first modality 606 may be a text modality and the second modality 616 may be a video modality. In other words, the first training example 602 may include text data as the first context signal 604 and the second training example 612 may include video data as the second context signal 614. The third training example 632 may be generated to comprise (i) the aforementioned training example query 638 (i.e. the first query 608, second query 618, or an aggregate thereof) and a ground truth output 640.

The ground truth output 640 may indicate whether the first modality 606 of the first context signal 604 is necessary (i.e. efficient, suitable, appropriate, or any other criteria consistent with the techniques and purpose of the dynamic input and/or output modality switching described above) for responding to the training example query 638. Alternatively, or in addition, the ground truth output 640 may indicate whether the second modality 616 of the second context signal 614 is necessary for responding to the training example query 638. For example, the ground truth output 640 may be a value of a 1 to indicate that the respective first 606 and/or second 616 modalities are necessary, or the ground truth output 640 may be a value of 0 to indicate that the respective first 606 and/or second 616 modalities are not necessary for responding to the training example query 638. The ground truth output 640 may be generated in any suitable way (e.g. by human annotation) and received accordingly as part of the dataset generation process. For example, a human annotator may be presented with the training example query 638 (i.e. either first and/or second queries 608, 618) and the available first 604 and second 614 context signals having their respective modalities 606, 616, and the human annotator may provide their annotation of e.g. 0 or 1 in response. Alternatively, or in addition, the ground truth output 640 may be generated by providing a machine learning model with the training example query 638 and the respective context signals (e.g. to augment or improve the efficiency of the training dataset generation process) to generate the annotation.

In some examples, the third training example 632 may be generated to further include (iii) a first indication 634 of the first modality 606 of the first context signal 604 from the first training example 602 and (iv) a second indication 636 of the second modality 616 of the second context signal 614 from the second training example 612, e.g. a list of available modalities. Such indications may be used to train the machine learning model 150 to actively discriminate, on inference, between the modalities in the list of available modalities.

Once one or more training examples (e.g. the third training example 632) for the third training dataset 630 have been generated, the third training dataset 630 may be provided as a training dataset for training the machine learning model 150, as previously described. The third training dataset 630 may be used to train the machine learning model 150 in any suitable way (e.g. using supervised training). For example, the machine learning model 150 may comprise one or more trainable parameters and the trainable parameters may be updated based upon a loss value computed during training.

The machine learning model 150 may be trained by receiving the third training dataset 630 comprising one or more training examples. The training may include processing, for each of the training examples of the third training dataset 630, a training model input (i.e. analogous to the model input 140) representing the respective training example query 638 using the machine learning model 150 to generate a training model output. As will be apparent, the training model output may be an indication or prediction of the respective input and/or output modalities to select specifically generated during the training process. A loss value for the training may be computed in any known way based upon the training model output and the aforementioned ground truth output 640. That is, the ground truth output 640 from the third training example 632 indicating whether the first modality 606 and/or second modality 616 is necessary for responding to the training example query 638 may serve as a target output for the machine learning model 150 (i.e. a target for the training model input) and the loss value may quantify an amount of error made by the machine learning model 150 in light of the target output and the actual output. One or more parameters of the machine learning mode 150 may thus be updated in any suitable way using the loss value (e.g. using an optimization algorithm such as Adam for backpropogating gradients of the machine learning model 150 based upon the loss value). The training process may occur in batches (i.e. multiple forward passes of the training model input before computing the loss value) and may occur across multiple epochs (i.e. multiple iterations of training using the same third training dataset 630).

In a specific training implementation, the third training example 632 may further include a second ground truth output (not depicted) indicating a ground truth response for performing the task (i.e. analogous to the response 170). Accordingly, the loss value may be computed by computing two separate loss values (i.e. a first and second value). The final loss value used to update the parameters of the machine learning model 150 may be computed as an aggregate of both the first and second values. The first value may be computed based upon at least a portion of the training model output (e.g. a single prediction from an individual head of a multi-headed machine learning model) and the ground truth output 640 (e.g. by comparing a selection of input and/or output modalities inferred by the machine learning model 150 during training with a target selection indicated by the ground truth output 640). Separately, the second value may be computed based upon at least a portion of the training model output and the second ground truth output indicating the ground truth (i.e. target) response for performing the task (e.g. by comparing the response 170 generated by the machine learning model 150 during training with a target response indicated by the second ground truth output). To produce a stable and balanced machine learning model 150 during training, the second value may be given a greater weight than the first value for computing the loss value (i.e. computed using both the first and second values). For example, the second value may be assigned a weight of 0.8 and the first value may be assigned a weight 0.2 for computing the final loss value. In this example, using a weighted average computation, if the first and second values are 0.69 and 1.23 respectively, the final loss value may be computed as 1.122 (i.e. (0.2*0.69 + 0.8*1.23) / (0.2 + 0.8)) = 1.122). In this way, during training, the machine learning model 150 incurs a relatively large penalty for generating an incorrect response 170 and a relatively small penalty for generating the response 170 using e.g. inappropriate, unsuitable, or otherwise inefficient modalities not necessary for generating a correct response 170. The machine learning model 150 is thus trained to prioritize generating an accurate response 170 whilst also training the machine learning model 150 with the objective of minimizing use of inefficient modalities. Once the machine learning model 150 has been trained, the machine learning model 150 may be provided for use (e.g. using dynamic input and/or output modality switching). While FIG.6 has been described with reference to joining two separate training datasets 600, 602, it will be appreciated that the matching 620 process may occur across three or more training datasets, thus resulting in the ground truth output 640 indicating the necessity of three or more different modalities. While FIG.6 has been described with reference to joining two separate training examples 602, 612, it will be appreciated that the matching 620 process may occur by matching an individual training example from one training dataset (e.g. the first training example 602) with a plurality of training examples from another training dataset (e.g. the second training example 612, and one or more additional training examples from the second training dataset 612), thus resulting in the ground truth output 640 indicating necessity of three or more different modalities.

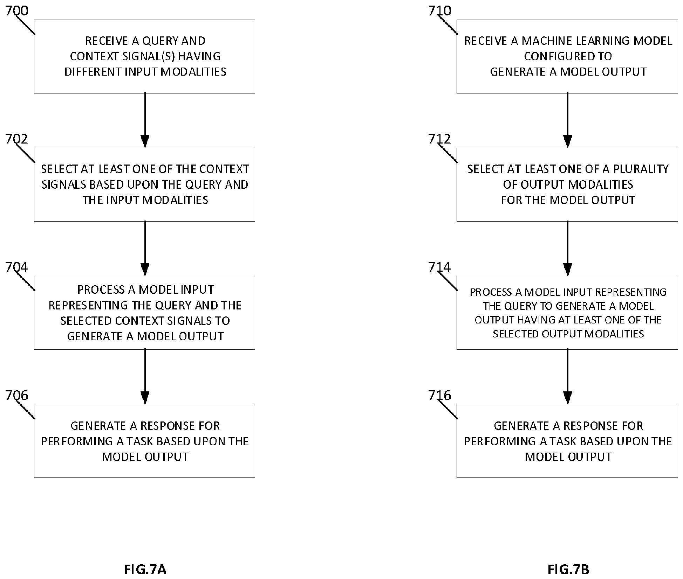

FIG.7A depicts a flow diagram of a method for generating a response for performing a task using a machine learning model using dynamic input modality switching.

At step 700, the method comprises receiving a query and one or more context signals for the query. Each context signal has a respective input modality of a plurality of input modalities, the respective input modality being different to the input modality of each other one of the one or more context signals.

At step 702, the method comprises selecting at least one of the one or more context signals for inclusion in a model input based upon the query and the respective input modalities of the one or more context signals.

At step 704, the method comprises processing the model input representing the query and the selected at least one context signal using a first machine learning model to generate a model output.

At step 706, the method comprises generating the response for performing the task based upon the model output.

FIG.7B depicts a flow diagram of a method for generating a response for performing a task using a machine learning model using dynamic output modality switching.

At step 710, the method comprises receiving a first machine learning model configured to process a model input representing a query to generate a model output having one or more output modalities of a plurality of output modalities. Each of the plurality of output modalities is different to each other one of the plurality of output modalities.

At step 712, the method comprises selecting, based upon the query, at least one of the plurality of output modalities for the model output.

At step 714, the method comprises processing the model input representing the query using the machine learning model to generate a model output having at least one of the selected output modalities.

At step 716, the method comprises generating the response for performing the task based upon the model output.

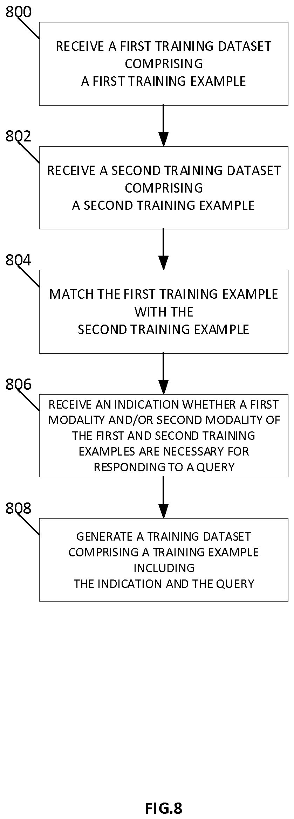

FIG.8 depicts a flow diagram of a method for generating a training dataset for training a machine learning model to implement dynamic modality switching.

At step 800, the method comprises receiving a first training dataset comprising a first training example including (i) a first context signal having a first modality and (ii) a first query about the first context signal.

At step 802, the method comprises receiving a second training dataset comprising a second training example including (iii) a second context signal having a second modality different from the first modality and (iv) a second query about the second context signal.

At step 804, the method comprises matching the first training example with the second training example based upon the respective first and second queries. The first and second queries are identical or exceed a degree of similarity thereby representing a training example query.

At step 806, the method comprises receiving an indication whether the first modality and/or the second modality are necessary for responding to the training example query.

At step 808, the method comprises generating the training dataset comprising a training example including (i) a ground truth output indicating whether the first modality and/or the second modality are necessary for responding to the training example query, and (ii) the training example query.

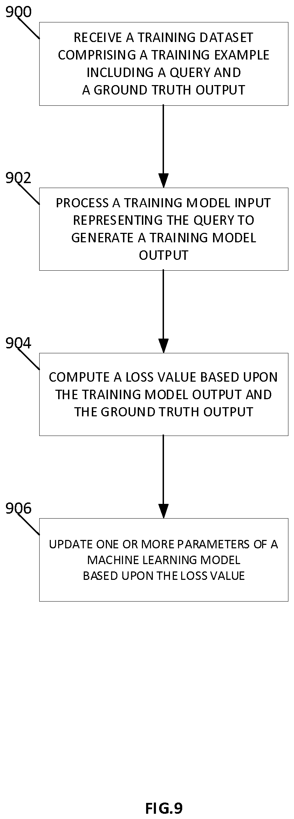

FIG.9 depicts a flow diagram of a method for training a machine learning model to implement dynamic modality switching.

At step 900, the method comprises receiving a training dataset comprising a training example including (i) a ground truth output indicating whether a first modality and/or a second modality are necessary for responding to a training example query, and (ii) the training example query.

At step 902, the method comprises processing a training model input representing (ii) the training example query using the machine learning model to generate a training model output.

At step 904, the method comprises computing a loss value based upon the training model output and (i) the ground truth output.

At step 906, the method comprises updating one or more parameters of the machine learning model based upon the loss value to train the machine learning model.

In general, the machine learning models described herein can have any appropriate architecture for processing model inputs to generate model outputs. As one example, the machine learning models may comprise an auto-regressive generative model that can auto-regressively generate an output sequence based on the model input. The generative model can, for example, comprise a large language model (LLM) that can auto-regressively generate tokenized representations of text data, a vision-language model (VLM) that can auto-regressively generate tokenized representations of image or video data, e.g. in response to a text input or that can auto-regressively generate tokenized representations of text, e.g. in response to an image input, an audio language model that can auto-regressively generate tokenized representations of text data. As will be apparent, the machine learning model may also be a multi-modal machine learning model that can that can generate tokens representing any of text, image, audio, etc. e.g. in response to an input comprising any of text, image, audio, and so forth. As one example, the generative model may comprise one or more (self-) attention layers, e.g., a Transformer model.

That is, the machine learning models described herein may comprise a neural network characterized by having a succession of attention neural network layers (e.g. a self-attention neural network layer). A self-attention neural network layer has an attention layer input for each element of the input sequence and is configured to apply an attention mechanism over the attention layer input to generate an attention layer output for each element of the input sequence. The attention layer input and the attention layer output may comprise vectors of the same dimension, and the attention neural network layers may have residual connections. There are many different types of attention mechanisms that are be suitable for use with the techniques described herein, such as self-attention, multi-headed attention, cross-attention, etc. A self-attention layer can be one that maps a query and a set of key-value pairs, each derived from an input to the self-attention layer (e.g. all vectors), to an output from which an output of the self-attention layer is derived. The output can be computed as a weighted sum of the values, weighted by a similarity function of the query to each respective key.

As an example, in a self-attention neural network layer an input embedding may be used to determine a query vector and a set of key-value vector pairs, that are used to generate an updated embedding comprising a weighted sum of the values, weighted by a similarity function of the query to each respective key. The similarity function may comprise, e.g., a dot product, cosine similarity, or other similarity measure; the query, keys, and values may all be vectors. For example the attention mechanism may be configured to apply each of a query transformation e.g. defined by a matrix *W^{Q},* a key transformation e.g. defined by a matrix *W^{K},* and a value transformation e.g. defined by a matrix *W^{V}*, to the attention layer input for each element of an input sequence ***X*** to derive a respective query vector Q *= XW^{Q},* key vector *K = XW^{K},* and value vector *V = XW^{V}* which are used determine an attended sequence for the output.

As will now be apparent, the attention layer input may be the model input 140, or an input derived therefrom such as an embedding. Likewise, the outputs of the attention mechanism, e.g. the keys, the queries, the values, and other outputs derived therefrom such as a dot product of the queries and keys or scaled attention scores, may be intermediate outputs (not depicted) of the machine learning model 150 generated during inference.

As described herein, the inputs and outputs may comprise tokens. In some implementations, the tokens can represent text, e.g., words, wordpieces, or characters, in a natural or computer language. For example, text may be received, e.g., as a series of encoded characters, e.g. UTF-8 encoded characters; such "characters" can include Chinese and other similar characters, as well as logograms, syllabograms and the like. A text encoder, i.e. a tokenizer, can process a sequence of text to represent the text as a series of text tokens from a vocabulary of text tokens, e.g. that each represent words, wordpieces or characters in a natural or computer language. The computer language may be any formal language used to communicate with a computer, e.g. a markup language, or a command or configuration language, or a data exchange language such as JSON, or a programming language. The tokenizer can, e.g., implement BPE (Byte Pair Encoding) or Wordpiece tokenization. Optionally the text can be obtained from audio data representing speech; the output tokens may be converted into audio data that represent speech corresponding to the text.

Also or instead the tokens may represent an image. For example, a set (sequence) of input or output tokens can represent an image. Each image token may comprise a block encoding of values of the pixels in a different region of an image that maps a set of values of the pixels to a respective image token. The block encoder may comprise a neural network, e.g. having one or more (self-)attention layers, such as a Transformer neural network as previously described.

Also or instead the tokens may represent an audio waveform. For example, a set (sequence) of input or output tokens can represent audio data representing a waveform e.g. instantaneous audio amplitude values or time-frequency audio data. Each image token may comprise a block encoding of the audio waveform in a different time segment of the audio that maps a set of values representing the audio waveform to a respective image token.

As described herein, the machine learning model 150 may be a language model such as a language model neural network. A language model neural network is a neural network that has been trained so that, given a text prompt (e.g. the query 130) that includes a sequence of tokens in a natural language, the neural network can generate the next token in the sequence. This process can be repeated to extend the text prompt one token at a time to generate a natural language output, i.e., to generate the natural language output auto-regressively token by token. At each time "time step", the language model neural network processes the current sequence to generate a probability distribution over a predetermined vocabulary of tokens. The next token can then be selected using the probability distribution, e.g., by sampling from the distribution using nucleus sampling or another sampling technique or by selecting the highest-probability token. The tokens in the vocabulary can include any of a variety of tokens, e.g., some combination of words, sub-words, characters, punctuation and other symbols, and numbers. As will be apparent, the input and output tokens may have one of the aforementioned modalities (e.g. image modality, text modality, audio modality, etc.). In general, the language model neural network is trained on a corpus of text made up of tokens from the vocabulary (and optionally other tokens that can be mapped to a designated out-of-vocabulary token), to predict the next token in a sequence of tokens from the training data.

A language model neural network can be made to perform a particular task by providing a natural language description of the desired response as an input or "prompt". In some cases, the prompt may be a few-shot prompt where a few, e.g., 1 to 10, examples of a query and an example output are provided in the text prior to the actual query.

Instead or in addition, a language model neural network may be "fine-tuned" to perform a particular task by obtaining a pre-trained language model neural network trained on a large corpus of examples as previously described and then further training part of all of the language model neural network on a relatively small number of examples particular to the type of task that is to be performed.

The language model neural network may be a large language model neural network, e.g., one that has greater than 1 billion, 10 billion or 100 billion trained parameters. The language model neural network may have been trained on greater than 10 billion, 100 billion or 1000 billion tokens representing words or other text tokens, e.g., sub-words (also known as "word pieces").

In some implementations, the language model neural network is an autoregressive transformer neural network as previously described.

The task, as referred to herein, may include any suitable task that may be performed based upon the model output 160. The task may include a classification task such as classifying the model input 140 and/or the query 130 (i.e. text classification, image classification, audio classification, video classification, sensor classification, or time-series classification). For example, the query 130 could include time-series data and the task could be to classify that time-series data into one or more categories by outputting categorical data. The task may include a control task for a robotic device. For example, the model output 160 and/or the response 170 may include signal data that causes the robotic device to be controlled (i.e. by providing the signal data to the robotic device). The task may include a machine translation task. For example, the query 130 could include text data representing text in a first language and the model output 160 and/or the response 170 could include text data representing a natural language translation of that text in a second language. The task may include a summarization task. For example, the model output 160 and/or the response 170 could be text data indicating a summary of some text represented by the model input 140. The task may include a question-answering task. For example, the query 130 could include text data indicating a question "What is this a picture of?" and image data (e.g. one of the context signals 100a - 100n) indicating an image of an elephant. In this example, the model output 160 and/or the response 170 may include text data indicating a response to the question including an answer that indicates "The picture is of an elephant", or indeed the model output 160 and/or the response 170 could include categorical data indicating a classification of an elephant. The task may include a generation task, i.e. a task for generating data. For example, the model input 140 may represent image data indicating an image of an elephant and the response 170 may include video data indicating a video of the elephant, i.e. where the machine learning model 150 has been trained to generate videos based upon images. The task may include a signalling task. For example, the query 130 could include audio data indicating a user speaking the words "Please schedule a meeting for next Monday" and the model output 160 and/or the response 170 could be a signal to a client device of the user which causes a meeting to be scheduled in a digital calendar of the client device.

In some examples, the task is a task for a real-world environment. That is, the machine learning model 150 may be trained to perform tasks in the real-world environment. For example, the task could include tasks in the field of autonomous self-driving, industrial robotics, healthcare, smart homes, agriculture, environmental monitoring etc. To perform tasks in the real-world environment, the machine learning model 150 may be configured to control (e.g. by outputting a signal as previously described) one or more mechanical and/or electronic devices for performing the task in the real-world environment. The mechanical and/or electronic devices are devices configured to perform specific tasks utilizing electrical and/or mechanical systems. Electronic devices may operate by e.g. using electrical circuits including components such as transistors, diodes, and microprocessors (e.g. to process instructions for controlling the mechanical and/or electronic device) to perform the task. Mechanical devices may operate by e.g. using physical movement and mechanical forces to perform the task. Mechanical devices may, in some examples, include gears, levers, motors, end effectors, etc. An example electro-mechanical device may be the robotic device as previously described, where the robotic device includes a circuit for processing instructions derived from output from the machine learning model 150 and an end effector for performing a task, such as operating a lever arm in the real-world.

The robotic device, as described above, may take various forms, including but not limited to a telepresence robot, a robotic arm, a bi-arm robotic device, a humanoid robot or other bipedal robot, a quadraped robot such as a "robot dog", a wheeled robot, an aquatic robot, and so forth. The robotic device may include control logic. Control logic may take various forms, such as a real time controller, one or more processors, one or more field-programmable gate arrays ("FPGA"), one or more application-specific integrated circuits ("ASIC"), and so forth. In some implementations, the logic may be operably coupled with memory. Memory may take various forms, such as random-access memory ("RAM"), dynamic RAM ("DRAM"), read-only memory ("ROM"), Magnetoresistive RAM ("MRAM"), resistive RAM ("RRAM"), NAND flash memory, and so forth. In some implementations, the control logic may be operably coupled with one or more joints, one or more end effectors, and/or one or more sensors. A joint of a robot may broadly refer to actuators, motors (e.g., servo motors), shafts, gear trains, pumps (e.g., air or liquid), pistons, drives, propellers, flaps, rotors, or other components that may create and/or undergo propulsion, rotation, and/or motion. An end effector may broadly refer to a variety of tools that may be operated by the robotic device in order to accomplish various tasks. For example, an end effector may take the form of a claw with two opposing "fingers" or "digits." Such a claw is one type of "gripper" known as an "impactive" gripper. The gripper may have more than two digits, for example, three, four or five digits. Other types of grippers may include but are not limited to "ingressive" (e.g., physically penetrating an object using pins, needles, etc.), "astrictive" (e.g., using suction or vacuum to pick up an object), or "contigutive" (e.g., using surface tension, freezing or adhesive to pick up object). More generally, other types of end effectors may include but are not limited to drills, brushes, force-torque sensors, cutting tools, deburring tools, welding torches, containers, trays, and so forth. In some implementations, end effector may be removable, and various types of modular end effectors may be installed onto robot. Some robots, such as some telepresence robots, may not be equipped with end effectors.

Large-scale language models implemented as neural networks can produce impressive results on a range of natural language processing tasks, including question answering. However, implementations of some these models, particularly Transformer-based models, can have more than a billion parameters and can require substantial computing resources, power, and time to process a network input to generate the network output. Sometimes such models can have can more than 10 billion or more than 100 billion parameters. If such models were used at scale, e.g. in the way that search engines are, there could also be environmental considerations.

An additional consideration arises when the neural network is implemented on a digital assistant device, e.g., a mobile device, implemented in a computing system that includes a back end component, in particular a data server, in communication with the digital assistant device over a data communications network such as the Internet. There is then a need to optimize the computing load between the digital assistant device and the back end component. This need can be particularly acute with a large-scale language model because of its substantial memory and computing requirements compared with those typically found on a mobile device.

The techniques described herein address these and other problems. In some implementations the described techniques facilitate a reduced a computational load, and improved load distribution, particularly when the large-scale language model is implemented as a neural network in a multitasking and parallel processing computer system, distributed across multiple sites and interconnected by a data communication network.

In some implementations the described techniques enable a beneficial distribution of computing load between a local, mobile computing device and a back-end server in a network. More particularly, in implementations, by training the machine learning model 150 to dynamically switch modalities according to the modalities that are most efficient for the particular query (e.g. modalities which result in fewer inference cycles or processing fewer tokens), computational load across a network (i.e. sending and receiving data) may be managed more effectively.

In general, the machine learning model 150, once trained on a large corpus of data, and even without fine tuning, can perform a wide range of tasks. After such training, the machine learning model 150 can be deployed for use in performing the task(s). For instance, the machine learning model 150 can be deployed in an environment that enables users to provide requests for the machine learning model 150 to process specified multi-modal inputs to generate corresponding outputs. Users can provide the requests, e.g., by way of a user interface or through an application programming interface (API). The requests can be transmitted from a user device (e.g., over a data communication network, e.g., the internet) to one or more computers implementing the system, e.g., in a data center. The machine learning model 150 can process multi-modal inputs specified by user requests to generate corresponding outputs, and then transmit the outputs to user devices (e.g., over a data communication network).

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally, or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of Al and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the Al model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method for generating a response for performing a task using a machine learning model, the method comprising:
receiving a query and one or more context signals for the query, wherein each context signal has a respective input modality of a plurality of input modalities, the respective input modality being different to the input modality of each other one of the one or more context signals;
selecting at least one of the one or more context signals for inclusion in a model input based upon the query and the respective input modalities of the one or more context signals;
processing the model input representing the query and the selected at least one context signal using a first machine learning model to generate a model output; and
generating the response for performing the task based upon the model output.

2. The method of claim 1, wherein the model input is associated with a default input modality of the plurality of input modalities, and
wherein selecting at least one of the one or more context signals for inclusion in the model input based upon the query and the respective input modalities of the one or more context signals comprises:
selecting at least one of the one or more context signals not having the default input modality as their respective input modality.

3. The method of claim 1 or 2, wherein selecting at least one of the one or more context signals for inclusion in the model input comprises:
processing a second model input representing the query and an indication of the respective input modality for each of the one or more context signals using a selection machine learning model to generate a second model output indicating the selection of the at least one context signal for inclusion in the model input; and
selecting the at least one context signal for inclusion in the model input based upon the second model output.

4. The method of claim 3, wherein the second model output further indicates, for each of the one or more context signals, (i) whether the input modality of the respective context signal is relevant for responding to at least a portion of the query and/or (ii) whether the input modality of the respective context signal is more efficient for responding to at least a portion of the query than the respective input modality of each other one of the one or more context signals; and/or
wherein the second model input further represents, for each of the one or more context signals, a number of tokens of the respective context signal and/or an estimated cost of processing the respective context signal using the first machine learning model to generate the model output.

5. The method of any preceding claim, further comprising:
generating a re-generation indication by processing a third model input representing the response using a critic machine learning model to generate a third model output indicating that the response is to be re-generated and/or receiving a re-generation indication based upon a user input indicating that the response is to be re-generated;
identifying one or more of the selected context signals for replacement;
replacing each of the one or more of the context signals identified for replacement with a different one of the one or more context signals not initially selected for inclusion in the model input thereby forming an updated set of context signals for inclusion in the model input;
processing a fourth model input representing the query and the one or more context signals part of the updated set using the first machine learning model to generate a fourth model output; and
re-generating the response for performing the task based upon the fourth model output.

6. The method of claim 5, wherein:
the one or more context signals not initially selected for inclusion in the model input replacing the context signals identified for replacement include a greater number of tokens than the context signals identified for replacement; and/or
re-generating the response with the fourth model input representing the one or more context signals part of the updated set is estimated to result in the first machine learning model exhibiting improved performance when compared to generating the response with the fourth model input representing the selected at least one context signal.

7. The method of any preceding claim, wherein receiving the one or more context signals for the query comprises:
receiving a primitive context signal having a respective input modality of the plurality of input modalities and representing content; and
generating, based upon the primitive context signal, the one or more context signals for the query, wherein each of the one or more context signals for the query is generated to have a different input modality to each other one of the one or more context signals while still representing the same content.

8. A computer-implemented method for generating a response for performing a task using a machine learning model, the method comprising:
receiving a first machine learning model configured to process a model input representing a query to generate a model output having one or more output modalities of a plurality of output modalities, each of the plurality of output modalities being different to each other one of the plurality of output modalities;
selecting, based upon the query, at least one of the plurality of output modalities for the model output;
processing the model input representing the query using the first machine learning model to generate a model output having at least one of the selected output modalities; and
generating the response for performing the task based upon the model output.

9. The method of claim 8, wherein the model output is associated with a default output modality of the plurality of output modalities, and
wherein selecting, based upon the query, at least one of the plurality of output modalities for the model output comprises:
selecting at least one of the plurality of output modalities not being the default output modality.

10. The method of claim 9 or 10, wherein selecting, based upon the query, the at least one of the plurality of output modalities for the model output comprises:
processing a second model input representing the query and an indication of the plurality of output modalities available for the selection using a selection machine learning model to generate a second model output indicating the selected output modalities for the model output; and
selecting the at least one output modality for the model output based upon the second model output,
optionally wherein the second model output further indicates, for each of the plurality of output modalities, (i) whether the respective output modality is relevant for responding to at least a portion of the query and/or (ii) whether the respective output modality is more efficient for responding to at least a portion of the query than each other one of the plurality of output modalities.

11. The method of claim 10, wherein the second model input further represents, for each output modality of the plurality of output modalities:
an estimated number of tokens for the model output having the respective output modality generated by processing the model input using the first machine learning model; and/or
an estimated cost of generating the model output having the respective output modality by processing the model input using the first machine learning model.

12. The method of any of claims 8 to 11, further comprising:
generating a re-generation indication by processing a third model input representing the response using a critic machine learning model to generate a third model output indicating that the response is to be re-generated and/or receiving a re-generation indication based upon a user input indicating that the response is to be re-generated;
identifying one or more of the selected output modalities for replacement;
replacing each of the one or more output modalities identified for replacement with a different one of the plurality of output modalities not initially selected for the model output thereby forming an updated set of output modalities for the model output;
processing a fourth model input representing the query using the first machine learning model to generate a fourth model output having the one or more output modalities of the updated set; and
re-generating the response for performing the task based upon the fourth model output.

13. The method of claim 12, wherein re-generating the response where the fourth model output has the one or more output modalities of the updated set is estimated to result in:
(i) the first machine learning model generating a greater number of tokens than where the fourth model output has the one or more initially selected output modalities; and/or
(ii) the first machine learning model exhibiting improved performance when compared to generating the model output having the one or more initially selected output modalities.

14. A computer-implemented method for generating a training dataset for training a machine learning model, the method comprising:
receiving a first training dataset comprising a first training example including (i) a first context signal having a first modality and (ii) a first query about the first context signal;
receiving a second training dataset comprising a second training example including (iii) a second context signal having a second modality different from the first modality and (iv) a second query about the second context signal;
matching the first training example with the second training example based upon the respective first and second queries, wherein the first and second queries are identical or exceed a degree of similarity thereby representing a training example query;
receiving an indication whether the first modality and/or the second modality are necessary for responding to the training example query; and
generating the training dataset comprising a training example including (i) a ground truth output indicating whether the first modality and/or the second modality are necessary for responding to the training example query, and (ii) the training example query.

15. A computer-implemented method for training a machine learning model, the method comprising:
receiving a training dataset generated according to the method of claim 14;
processing a training model input representing (ii) the training example query using the machine learning model to generate a training model output;
computing a loss value based upon the training model output and (i) the ground truth output; and
updating one or more parameters of the machine learning model based upon the loss value to train the machine learning model.

16. A computer-implemented method for training a machine learning model, the method comprising:
receiving a training dataset comprising a training example including (i) a ground truth output indicating whether a modality is necessary for responding to a training example query, and (ii) the training example query;
processing a training model input representing (ii) the training example query using the machine learning model to generate a training model output;
computing a loss value based upon the training model output and (i) the ground truth output; and
updating one or more parameters of the machine learning model based upon the loss value to train the machine learning model

17. The method of claim 15 or 16, wherein the training example of the training dataset further includes (iii) a second ground truth output indicating a ground truth response for performing the task, and wherein computing the loss value comprises:
computing a first value based upon at least a portion of the training model output and (i) the ground truth output;
computing a second value based upon at least a portion of the training model output and (iii) the second ground truth output;
computing the loss value based upon the first value and the second value; and
wherein the second value is weighted greater than the first value for computing the loss value.

18. The method of any preceding claim, wherein the modalities are each one of an image modality, a video modality, an audio modality, a text modality, a user-interface modality, a sensor modality, a tactile modality, a gestural modality, an environmental modality, a meteorological modality, a simulation modality, a diagnostic modality, a biological modality, a chemical modality, a temporal modality, a geospatial modality, a metadata modality, or a signal modality; and/or
wherein the task comprises a classification task, a control task for a robotic device, a machine translation task, a summarization task, a question-answering task, a data generation task, or a signalling task; and/or
wherein the task is a task for a real-world environment, and wherein the model output is configured for controlling one or more mechanical and/or electronic devices for performing the task in the real-world environment.
